# EUROPEAN PATENT APPLICATION

(11) **EP 1 056 252 A2**
(43) Date of publication of application: **29.11.2000**
(21) Application number: 00111424.8
(22) Date of filing: 26.05.2000
(51) Int. Cl.: H04L 29/06, G06F 17/30, H04L 12/28

(54) **Information receiving terminal device**

(30) Priority: 28.05.1999 JP 15062499
(71) Applicant: NEC CORPORATION, Tokyo (JP)
(72) Inventor: Ishii, Hiroshi, Minato-ku, Tokyo (JP)
(74) Representative: von Samson-Himmelstjerna, Friedrich R., Dipl.-Phys.

(57) **Abstract**

An information receiving terminal device includes a connector and a processor. The connector is selectively connected to one of a plurality of communications paths connected to the network including at least one server. The processor receives, from the server, volume information representing a volume of desired information based on address information representing an address of the desired information stored in the server on the network, via the communications path connected to the connector. The processor selects one communications path from the plurality of communications paths and connects the selected communications path with the connector, based on the volume of the desired information represented by the received volume information. Furthermore, the processor receives the desired information from the server via the selected communications path.

## Description

### BACKGROUND OF THE INVENTION

### Field of the Invention

The present invention relates to an information receiving terminal device, and more particularly, to an information receiving terminal device which performs data communications using a plurality of communications paths.

### Description of the Related Art

Of late, information receiving terminal devices, to be connected to the Internet, receive Web pages which are described in HTML (Hyper Text Markup Language) as data in hypertext form and also a series of files, such as diagrams, graphs, etc., in association with the Web pages, using the HTTP (Hyper Text Transfer Protocol). The Web pages and the data are in their corresponding servers on the network. When performing a data receiving process, a telephone line and a satellite channel can be used.

Examples of such a telephone line include a digital network, such as an ISDN, etc., and a public line. The speed at which data communications is performed through the Internet using the current public line is approximately 56kbps at the maximum. On the other hand, the speed at which data communications is performed through the Internet using the digital network is approximately 128kbps at the maximum. Further, the speed at which data communications is performed through the Internet using a satellite channel is in a range from 500kbps to more than 1Mbps, i.e., the speed is dozens of times higher than the case of the telephone line. Thus, if the information receiving terminal devices can perform data communications through a satellite channel, transmitting of files can be performed within a short period of time.

In consideration of the characteristics, only one-way data communications is performed through a satellite channel, i.e., data communications is performed only in a (up-down) direction from the server to terminals. Accordingly, in the conventional information receiving terminal devices, in the case where data is transmitted in a (bottom-up) direction from terminals to the server, data communications is stably performed through a telephone line. On the contrary, in the case where data is transmitted in a (up-down) direction from the server to terminals, data communications is stably performed through a satellite channel.

Unexamined Japanese Patent Application KOKAI Publication No. H5-153277 discloses a technique, which has relevance to the present invention, for selecting, of a plurality of telephone lines, one line which can be connected at the minimum telephone rates, in accordance with an amount of data to be transmitted. Unexamined Japanese Patent Application KOKAI Publication No. H9-179806 discloses a technique for transmitting files to computers through a communication path, which can be connected at the most economical telephone rates, of a plurality of telephone lines and an ISDN, and also for grouping files, if the file size of the files is small, and sending the grouped files. Further, Unexamined Japanese Patent Application KOKAI Publication No. H10-21165 discloses a technique, wherein a client computer sends to a server a request for data to be sent and informs the server of the environment of the client computer itself, and the server edits the data and sends the edited data thereto in a manner suitable for the environment of the client computer, in the conditions where data communications are performed using the Internet. In addition to the above, Unexamined Japanese Patent Application KOKAI Publication No. H10-93629 discloses a technique for forming a communication path which is suitable for service attributes as requested through a source station, in data communications using a computer network, such as the Internet, etc. Such references do not disclose a technique involving data communications using a satellite channel. The full disclosures of those references are incorporated herein by reference.

However, the conventional information receiving terminal devices entail the following problems:
(1) The telephone rates for a telephone line is charged, generally, on the basis of the total connection period. On the contrary, the rates for a satellite channel are charged, in many case, on the basis of the total amount of transmitted data. Therefore, in the case where the satellite channel and the telephone line are fixedly and parallelly used, it costs extra money for the satellite channel as compared with the case where only the telephone line is used.
(2) Though data communications through the telephone line can be performed at low rates, the communications speed is relatively low, resulting in requiring a long period of time for receiving a large volume of file. On the contrary, if data communications are performed through a satellite channel, the communications speed is quite high, thus only a short period of time is required for receiving files. However, such data communications are performed at high rates, i.e., it costs a lot.

### SUMMARY OF THE INVENTION

In consideration of the above, it is accordingly the first object of the present invention to provide an information receiving terminal device, which selects an optimum communications path and receives data to be received, in consideration of characteristics of the data to be received and characteristics of a plurality of communications path.

The second object of the present invention is to provide an information receiving terminal device, in which data communications is performed in a short period of time, thereby reducing the cost of communications rates.

The third object of the present invention is to provide an information receiving terminal device which is miniaturized in size, thereby reducing the cost for manufacturing the device.

In order to achieve the above-described objects, according to the first aspect of the present invention, there is provided an information receiving terminal device comprising:
a connector (11, 12) which is selectively connected to one of a plurality of communications paths to be connected to a network (113) including at least one server (114); and
a processor (13, 14, 15, 16, 17, 18) which
   receives, from the at least one server, volume information representing a volume of desired information based on address information representing an address of the desired information stored in the at least one server on the network, via the communications path connected to the connector,
   selects a communications path from the plurality of communication path, and connects the selected communications path with the connector, based on the volume of the desired information represented by the volume information, and
   receives the desired information from the at least one server via the selected communications path.

According to the structure, an optimum communications path can be selected from the plurality of communications path, in accordance with the volume of the data to be received. This realizes a reduction in the time required for data communications and a reduction in the cost of communications rates.

In the first preferred embodiment of the information receiving terminal device according to the first aspect of the present invention, the processor extracts and obtains the address information from information to be received from the at least one server, via the communications path connected to the connector. Accordingly, an optimum communications path can be selected, even when receiving the address information regarding the data to be received.

In the second preferred embodiment of the information receiving terminal device according to the first aspect of the present invention, the processor extracts and obtains the plurality of address information items from the information to be received from the at least one server, and receives the plurality of volume information items based on the obtained plurality of address information items. Accordingly, the plurality of address information items can be received at once, and the plurality of volume information items corresponding to the plurality of address information items can be received at once as well.

In the third preferred embodiment of the information receiving terminal device according to the first aspect of the present invention, the processor receives the plurality of desired information items in order of the volumes of the desired information items represented by the received plurality of volume information items. Accordingly, when selecting a communications path in accordance with a volume of desired information to be received, the number of times the communications paths is switched from one to another can be reduced.

In the fourth preferred embodiment of the information receiving terminal device according to the first aspect of the present invention, the processor extracts and obtains an arbitrary one address information from information to be received from the at least one server, and receives the volume information based on the obtained address information. Accordingly, only one desired information can be selected and received.

In the fifth preferred embodiment of the information receiving terminal device according to the first aspect of the present invention, the plurality of communications paths include a telephone line and a satellite channel, the desired information includes at least one file which is described in a page description language, the volume information includes information representing a file size included in the header portion of the at least one file described in the page description language, and the processor receives information from the at least one server based on a protocol regarding sending and receiving of data on the Internet.

According to the second aspect of the present invention, there is provided an information receiving terminal device comprising:
connecting means (11, 12) which is selectively connected to one of a plurality of communications paths connected to a network (113) including at least one server (114);
first receiving means (14) which receives, from the at least one server, volume information representing a volume of desired information based on address information representing an address of the desired information stored in the at least one server on the network, via the communications path connected to the connecting means;
selecting means (13) which selects a communications path from the plurality of communications pats and connects the selected communications path with the connecting means, based on the volume of the desired information represented by the volume information received by the first receiving means; and
second receiving means (14) which receives the desired information from the at least one server via the communications path selected by the selecting means.

According to the third aspect of the present invention, there is provided an information receiving method, comprising:
a first selecting step of selecting one communications path from a plurality of communications paths connected to a network (113) including at least one server (114);
a first receiving step of receiving from the at least one server volume information representing a volume of desired information based on address information representing an address of the desired information stored in the at least one server on the network, via the communications path selected by the first selecting step;
a second selecting step of selecting one communications path from the plurality of communications path based on the volume of the desired information represented by the volume information received by the first receiving step; and
a second receiving step of receiving the desired information from the at least one server, via the communications path selected by the second selecting step.

According to the fourth aspect of the present invention, there is provided a computer readable recording medium which stores a program for making a computer with communication performance function as an information receiving terminal device which comprises:
a connector (11, 12) which is selectively connected to one of a plurality of communications pats connected to a network (113) including at least one server (114); and
a processor (13, 14, 15, 16, 17, 18) which
   receives, from the at least one server, volume information representing a volume of desired information based on address information representing an address of the desired information stored in the at least one server on the network, via the communications path connected to the connector,
   selects one communications path from the plurality of communications path and connects the selected communications path with the connector, based on the volume of the desired information represented by the received volume information, and
   receives the desired information from the at least one server via the selected communications path.

According to the fifth aspect of the present invention, there is provided a program signal embodied in a carrier wave for making a computer with communications performance function as an information receiving terminal device which comprises:
a connector (11, 12) which is selectively connected to one of a plurality of communications paths connected to a network (113) including at least one server (114); and
a processor (13, 14, 15, 16, 17, 18) which
   receives, from the at least one server, volume information representing a volume of desired information based on address information representing an address of the desired information stored in the at least one server on the network, via the communications path connected to the connector,
   selects one communications path from the plurality of communications paths and connects the selected communications path with the connector, based on the volume of the desired information represented by the received volume information, and
   receives the desired information from the at least one server via the selected communications path.

### BRIEF DESCRIPTION OF THE DRAWINGS

These objects and other objects and advantages of the present invention will become more apparent upon reading of the following detailed description and the accompanying drawings in which:
FIG. 1 is a block diagram showing the entire structure of an information receiving terminal device according to the first embodiment of the present invention;
FIG. 2 is a diagram showing the inner structure of a link information storage device which is illustrated in FIG. 1;
FIG. 3 is a flowchart showing an information receiving process which is carried out using the information receiving terminal device illustrated in FIG. 1;
FIG. 4 is a block diagram showing the entire structure of an information receiving terminal device according to the second embodiment of the present invention; and
FIG. 5 is a flowchart showing an information receiving process which is carried out using the information receiving terminal device illustrated in FIG. 4.

### DETAILED DESCRIPTION OF THE PREFERRED EMBODIMENT

Preferred embodiments of the present invention will now specifically be described with reference to the attached drawings.

### [First Embodiment]

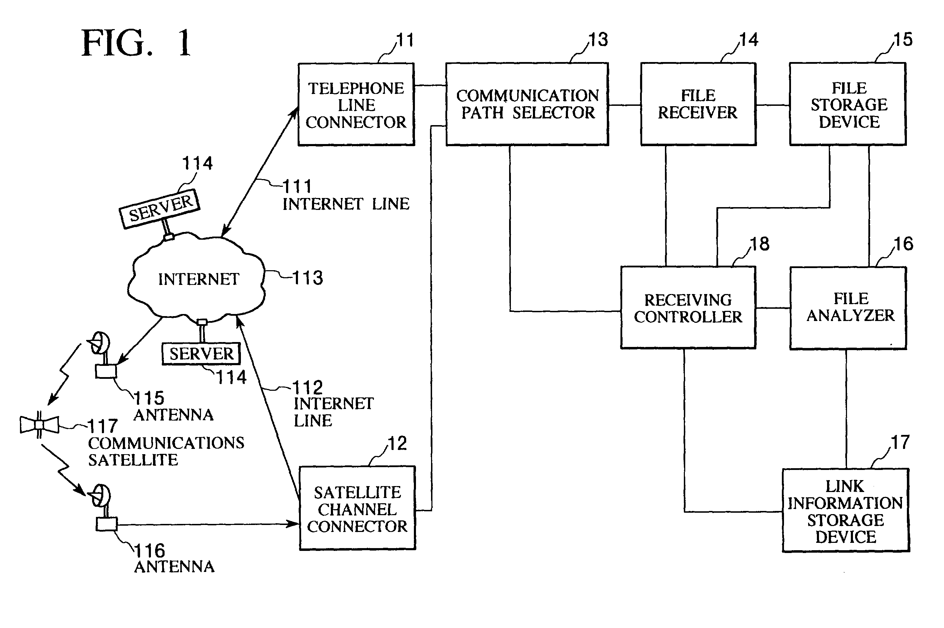

FIG. 1 is a block diagram showing the entire structure of an information receiving terminal device according to the first embodiment of the present invention. The information receiving terminal device, shown in FIG. 1, comprises a telephone line connector 11, a satellite channel connector 12, a communication path selector 13, a file receiver 14, a file storage device 15, a file analyzer 16, a link information storage device 17 and a receiving controller 18.

The telephone line connector 11 is connected to an Internet line 111 using a modem, etc., thereby to receive data from a server 114 and to send to a server 114 a request for data to be transmitted from the server 114 on the Internet 113. The satellite channel connector 12 is connected to an Internet line 112 using a modem, etc., and sends a request to the server 114 on the Internet 113 for data to be transmitted. The server 114 which has received the request for data sends data to a communications satellite 117 via a transmission antenna 115 which is connected to the Internet 113. The satellite channel connector 12 receives the data sent from the communications satellite 117 via a receiving antenna 116.

The communication path selector 13 controls the telephone line connector 11 and the satellite line connector 12 so as to select either one of a telephone line or satellite channel to be in a usable state for data communications. The file receiver 14 receives a file sent through the telephone line connector 11 or the satellite line connector 12. The file storage device 15 stores the file which the file receiver 14 has received. The file analyzer 16 analyzes the data contents of the received file stored in the file storage device 15, and extracts, from the received file, link information regarding linking to any other files. The link information storage device 17 stores information regarding any files to be linked to the received file. The receiving controller 18 controls the link selector 13, the file receiver 14, the file storage device 15, the file analyzer 16 and the link information storage device 17.

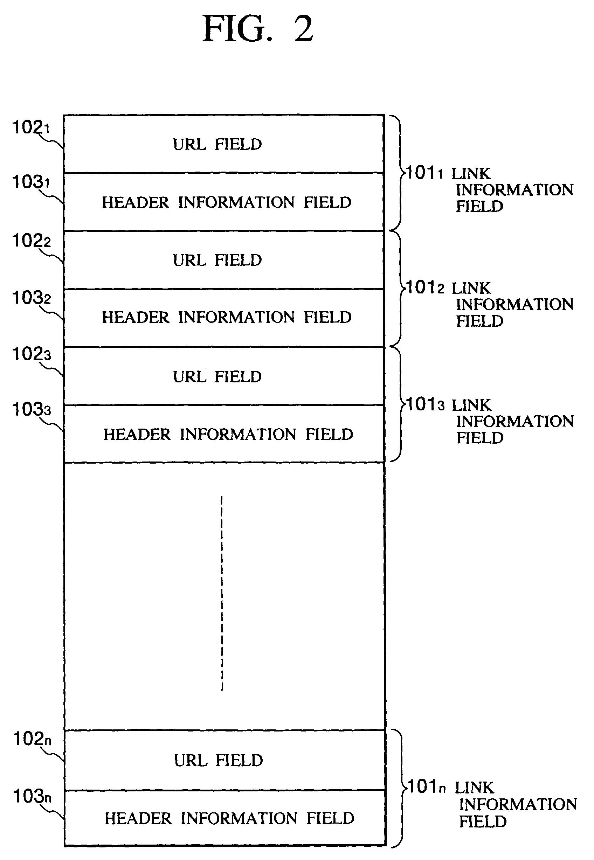

FIG. 2 is a diagram showing the internet structure of the link information storage device 17 shown in FIG. 1. The link information storage device 17, illustrated in FIG. 2, includes a plurality of link information fields 101₁ to 101ₙ, and stores link information. The link information fields 101₁ to 101ₙ, respectively include: URL fields 102₁ to 102ₙ for storing URLs (Uniformed Resource Locators) each representing an address of a file to be linked; and header information fields 103₁ to 103ₙ for storing header information including the size of a file to be linked. The link information fields 101₁ to 101ₙ may respectively include any field for storing information regarding files types or the like, as needed.

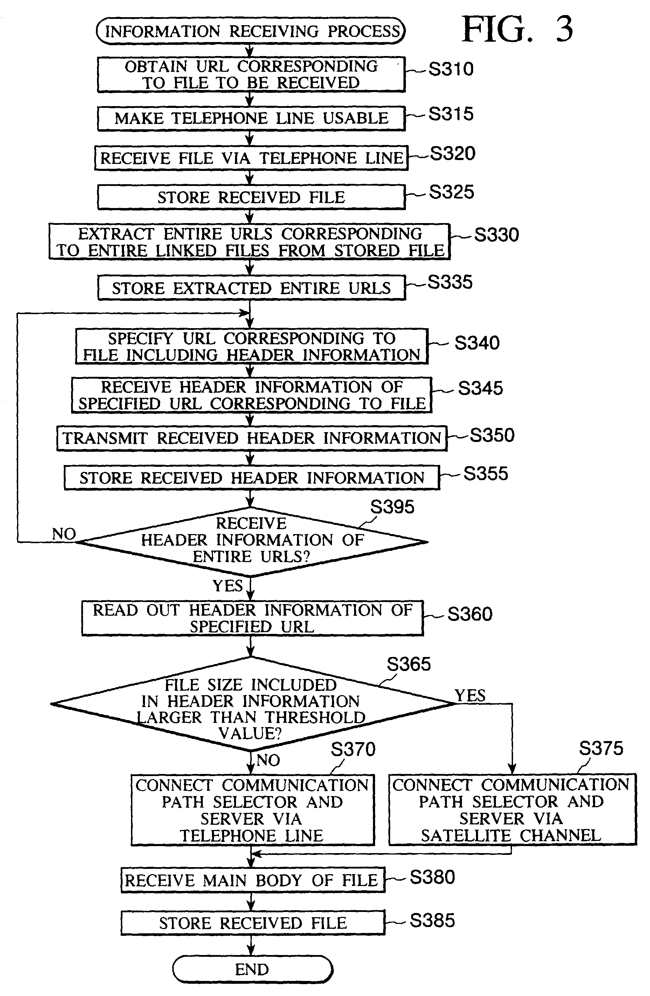

FIG. 3 is a flowchart showing an information receiving process to be carried out by the information receiving terminal device shown in FIG. 1. With reference to FIGS. 1 to 3, operations of the information receiving terminal device will now be described in the case where a URL is specified and transmitted using the telephone line connector 11, and where a file corresponding to the specified URL is received using the telephone line connector 11 or the satellite channel connector 12, under the conditions where an Internet connection is made.

As described in FIG. 3, in the information receiving process, each of the communication path selector 13, the file receiver 14, the file storage device 15, the file analyzer 16 and the link information storage device 17 receives a control signal sent from the receiving controller 18, so as to carry out its corresponding procedure. When the corresponding procedure ends, each of the communication path selector 13, the file receiver 14, and the file storage device 15, the file analyzer 16 and the link information storage device 17 sends, to the receiving controller 18, a signal representing the completion of the procedure. On the other hand, upon reception of a control signal from the communication path selector 13, each of the telephone line connector 11 and the satellite channel connector 12 carries out its corresponding procedure. When the corresponding procedure ends, each of the telephone line connector 11 and the satellite channel connector 12 sends, to the communication path selector 13, a signal representing the completion of the procedure.

The receiving controller 18 obtains a URL corresponding to a target HTML file to be received in accordance with an external instruction, such as that from the user, etc., and sends an instruction to receive the HTML file to the file receiver 14 (Step S310; hereinafter referred to simply as S310, and the same applies to the following steps). The communication path selector 13 makes the telephone line connector 11 operable (S315). When the telephone line connector 11 thus becomes operable, the file receiver 14 is connected to the Internet via a telephone line, and receives from the server the HTML file which corresponds to the URL which the receiving controller 18 has instructed the file receiver 14 to receive (S320). The file storage device 15 stores the HTML file which the file receiver 14 has received (S325).

The file analyzer 16 reads out the HTML file stored in the file storage device 15, analyzes the data contents of the HTML file, searches for a portion in which link information for linking to external files is written, and extracts from the searched link information the entire URLs corresponding to the entire external files linked to the HTML file (S330). The link information storage device 17 stores the entire URLs corresponding to the linked files and extracted by the file analyzer 16 respectively in URL fields 102₁ to 102ₙ (S335).

The receiving controller 18 sequentially reads out the URLs of the linked files which are stored in a corresponding one of the URL fields 102₁ to 102ₙ in the link information storage device 17 in S335, and instincts the file receiver 14 to receive a URL corresponding to a file including header information to be received (S340). The file receiver 14 requests the server to send the header portion including the header information of the file, and receives, from the server, the header information included in the file corresponding to the specified URL, in accordance with a HEAD method of the HTTP protocol (S345). It should be noted that the received header information includes information regarding the file size.

The receiving controller 18 transmits the header information which the file receiver 14 has received to the link information storage device 17 (S350). The link information storage device 17 stores the header information into a corresponding one of the header information fields 103₁ to 103ₙ corresponding to the specified URL (S355). For example, in the case where the URL field 102₁ in the link information field 101₁ is specified in S340, and the header information is received in S345, the received header information is stored in a corresponding header information field 103₁.

The receiving controller 18 determines whether the file receiver 14 has received the entire header information in the files corresponding to the entire URLs stored respectively in URL fields 102₁ to 102ₙ (S395). When determined that the file receiver 14 has not yet received the entire header information in the files corresponding to the entire URLs, the flow returns to S340. In S395, when determined that the file receiver 14 has received the entire header information corresponding to the entire URLs, the flow advances to S360.

The receiving controller 18 reads out URLs corresponding to the linked files, which are specified by the user, etc., from a corresponding one of the URL fields 102₁ to 102ₙ, and reads out the header information corresponding to the read URLs from a corresponding one of the header information fields 103₁ to 103ₙ (S360).

The receiving controller 18 compares the file size included in the read header information and a predetermined threshold value (S365). In the case where the file size of the read file is smaller than the threshold value, the flow advances to S370, whereas in the case where the file size of the read file is larger than the threshold value, the flow advances to S375. Such a threshold value is stored in the receiving controller 18.

The communication path selector 13 is used for connecting the information receiving terminal device with a server, using the telephone line connector 11 (S370). Upon connection of the information receiving terminal device with the server, the flow advances to S380.

The communication path selector 13 is used for connecting the information receiving terminal device with the server, using the satellite channel connector 12 (S375). Upon connection of the information receiving terminal device with the server, the flow advances to S380.

The file receiver 14 sends a request to the server for transmission of the header portion and the main body of the file, and receives, from the server, the header portion and the main body of the file corresponding to the specified URL, in accordance with a GET method of the HTTP protocol (S380). The file storage device 15 stores the file which the file receiver 14 has received (S385). Upon completion of reception and storage of the file, the information receiving process ends.

Accordingly, as explained in the first embodiment, prior to the reception of the file linked to the received HTML file, the information regarding only the file size, as included in the header information of the linked file, is received. Furthermore, selection of whether the file is received through a telephone line or a satellite channel is made in advance, in accordance with the received file size. In the case where the file size is smaller than a threshold value, it is suggested that a telephone line which can be utilized at low rates is to be used. In the case where the file size is larger than a threshold value, the use of a satellite channel for receiving the file is suggested, because the use of a telephone line in that case is quite time consuming. By doing so, a reduction in the cost of telephone rates and in the communication time can be achieved, in the case where an HTML file and any files linked thereto are to be received.

In the case of reading the URLs and the header information from a corresponding one of the link information fields 101₁ to 101ₙ in S360, such URLs and header information can be read sequentially in order of the file sizes of files included in the header information. Alternatively, the URLs of the linked files which are stored in the a corresponding one of the URL fields 102₁ to 102ₙ in S335 can be set in order of the file sizes in advance. By doing so, when selecting whether the data communications is to be performed through a telephone line or a satellite channel in S370 or S375, it is possible to reduce the frequency with which the telephone line is switched into or from the satellite channel. Therefore, a reduction in the cost of telephone rates and in the communication time can be achieved.

Furthermore, when receiving, not only the linked files, but also the HTML files in S320, only the header information may be received through the telephone line. In such a case, extraction of the information regarding the file size included in the received header information is performed, and the extracted file size and a threshold value are compared. In accordance with the resultant comparison, the selection of whether data communications are to be performed through a telephone line or a satellite channel is performed, thereafter to receive the files through the selected line or channel (procedures corresponding to S325 to S385). After this, procedures including and following the procedure of S325 are carried out. This realizes a reduction in the cost of telephone rates and the rates for a satellite channel.

### [Second Embodiment]

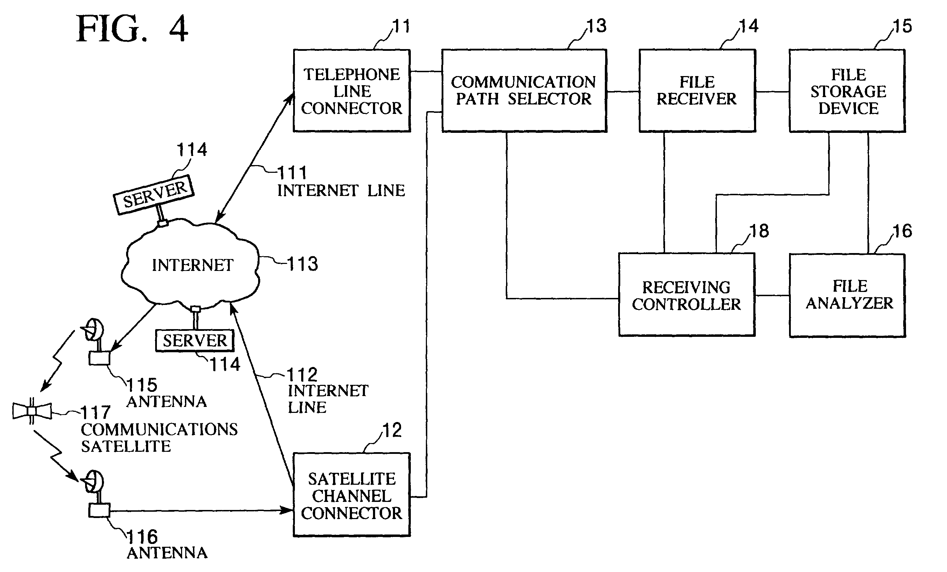

FIG. 4 is a block diagram showing the entire structure of an information receiving terminal device according to the second embodiment of the present invention. In FIG. 4, the same reference numerals are affixed to those devices which have already been described in FIG. 1, thus explanations regarding such devices are not repeatedly made in this embodiment. The structural differences between the first and second embodiments are as follows: The information receiving terminal device according to the second embodiment does not include the link information storage device 17. In addition to this, controlled by the receiving controller 18 are the communication path selector 13, the file receiver 14, the file storage device 15 and the file analyzer 16.

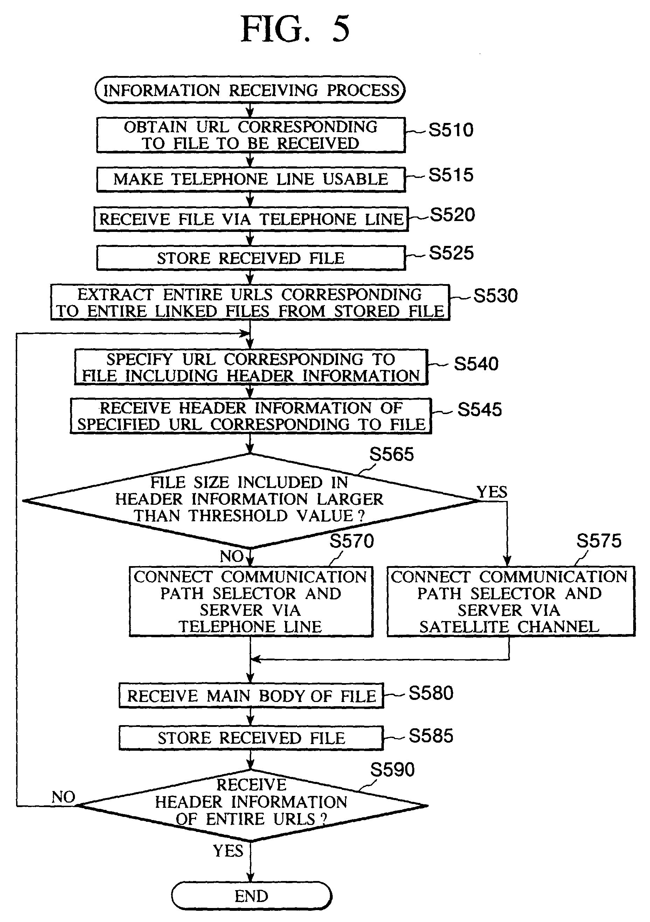

FIG. 5 is a flowchart showing an information receiving process to be carried by the information receiving terminal device illustrated in FIG. 4. With reference to FIG. 5, operations of the information receiving terminal device will now be made to the case where URLs are sent using the telephone line connector 11 and files are received using the telephone line connector 11 or the satellite channel connector 12, under the conditions that an Internet connection is made.

The receiving controller 18 obtains a URL corresponding to an HTML file to be received, and instructs the file receiver 14 to receive the HTML file, in accordance with an external instruction, such as from the user, etc (S510). The communication path selector 13 controls the telephone line connector 11 to be in a usable state (S515). When the telephone line connector 11 is in such a usable state, the file receiver 14 is connected to the Internet through a telephone line, and receives from the server the HTML file corresponding to the URL which the receiving controller 18 has instructed the file receiver 14 to receive (S520). The file storage device 15 stores the HTML file which the file receiver 14 has received (S525).

The file analyzer 16 reads out the HTML file stored in the file storage device 15, analyzes the contents thereof, searches for a portion in which link information for linking to external files is stored, and extracts, from the searched link information, the entire URLs corresponding to the entire external files linked to the HTML file (S530).

The receiving controller 18 reads out one URL, of the entire URLs, corresponding to the linked file which the file analyzer 16 has extracted in S530, and instructs the file receiver 14 to receive a URL corresponding to a file including header information (S540). The file receiver 14 sends a request to a sewer for transmission of the header information included in the file, and receives, from the sewer, the header information included in the file corresponding to the specified URL, in accordance with a HEAD method of the HTTP protocol (S545). The received header information includes information representing the file size of the received file.

The receiving controller 18 compares the file size, included in the header information which the file receiver 14 has received, with a predetermined threshold value (S565). In the case where the read file size is smaller than the threshold value, the flow advances to S570, whereas in the case where the read file size is larger than the threshold value, the flow advances to S575. Such a threshold value is stored in the receiving controller 18.

The communication path selector 13 is used for connecting the information receiving terminal device with the server, using the telephone line connector 11 (S570). Upon connection of the information receiving terminal device with the server, the flow advances to S580.

The communication path selector 13 is used for connecting the information receiving terminal device with the server, using the satellite channel connector 12 (S575). Upon connection of the information receiving terminal device with the server, the flow advances to S580.

The file receiver 14 sends a request to a server for transmission of the header portion and the main body of the file to be received, and receives the header portion and the main body of the file corresponding to the specified URL from the server in accordance with a GET method of the HTTP protocol (S580). The file storage device 15 stores the file which the file receiver 14 has received (S585).

The receiving controller 18 determines whether the file receiver 14 has received the header information regarding the entire URLs of the linked files which are extracted by the file analyzer 16 in S530 (S590). When determined that the entire header information of the linked files are not yet completely received, the flow advances to S540. On the contrary, when determined that the entire header information of the linked files are completely received, the information receiving process ends.

As explained in the second embodiment, there is no need to prepare any area for storing the link information, thus miniaturization of the information receiving terminal device in its entirety can be realized.

When the URLs corresponding to the linked files are extracted in S530, instead of extracting the entire URLs, only one URL may be extracted, and determination of whether the entire URLs are extracted may be made in S590.

Furthermore, when receiving, not only the linked files, but also the HTML files in S520, only the header information may be received through a telephone line. In such a case, the data regarding the file size included in the received header information is extracted, and the extracted data of file size is compared with the threshold value. In accordance with the resultant comparison, selection of whether data communications are to be performed through a telephone line or a satellite channel is made, and a file is received via the selected telephone line or a satellite channel (procedures corresponding to S525 to S585). Thereafter, the procedures including and following S525 are carried out. This realizes a reduction in the cost of telephone rates and satellite channel rates.

As explained above, according to the present invention, selection of whether a telephone line or a satellite channel is to be used for appropriate reception of files can be made. According to this structure, the time required for data communications and the cost of telephone rates and satellite channel rates can be reduced. In addition, miniaturization of the information receiving terminal device can be achieved, resulting in reducing the cost for manufacturing and maintaining the information receiving terminal device.

Various embodiments and changes may be made thereonto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

This application is based on Japanese Patent Application No. H11-150624 filed on May 28, 1999, and including specification, claims, drawings and summary. The disclosure of the above Japanese Patent Application is incorporated herein by reference in its entirety.

## Claims

1. An information receiving terminal device comprising:
a connector (11, 12) which is selectively connected to one of a plurality of communications paths to be connected to a network (113) including at least one server (114); and
a processor (13, 14, 15, 16, 17, 18) which
receives, from the at least one server, volume information representing a volume of desired information based on address information representing an address of the desired information stored in the at least one server on the network, via the communications pat connected to said connector,
selects a communications path from the plurality of communication path, and connects the selected communications path with said connector, based on the volume of the desired information represented by the volume information, and
receives the desired information from the at least one server via the selected communications path.

2. The information receiving terminal device according to claim 1, wherein said processor (13, 14, 15, 16, 17, 18) extracts and obtains the address information from information to be received from the at least one server, via the communications path connected to said connector.

3. The information receiving terminal device according to claim 1, wherein:
the desired information includes a plurality of desired information items;
the address information includes a plurality of address information items;
the volume information includes a plurality of volume information items; and
said processor (13, 14, 15, 16, 17, 18) extracts and obtains the plurality of address information items from information to be received from the at least one server, and receives the plurality of volume information items based on the obtained plurality of address information items.

4. The information receiving terminal device according to claim 3, wherein said processor (13, 14, 15, 16, 17, 18) receives the plurality of desired information items in order of the volumes of the desired information items which are represented by the plurality of received volume information items.

5. The information receiving terminal device according to claim 2, wherein said processor (13, 14, 15, 16, 17, 18) extracts and obtains an arbitrary one address information from information to be received from the at least one server, and receives the volume information based on the obtained address information.

6. The information receiving terminal device according to claim 1, wherein:
the plurality of communications paths include a telephone line and a satellite channel;
the desired information includes at least one file which is written in a page description language;
the volume information includes information representing a file size included in a header portion of the at least one file described in the page description language; and
said processor (13, 14, 15, 16, 17, 18) receives information from the at least one server based on a protocol regarding sending and receiving of information on Internet.

7. An information receiving terminal device comprising:
connecting means (11, 12) which is selectively connected to one of a plurality of communications paths connected to a network (113) including at least one server (114);
first receiving means (14) which receives, from the at least one server, volume information representing a volume of desired information based on address information representing an address of the desired information stored in the at least one server on the network, via the communications path connected to said connecting means;
selecting means (13) which selects a communications path from the plurality of communications paths and connects the selected communications path with said connecting means, based on the volume of the desired information represented by the volume information received by said first receiving means; and
second receiving means (14) which receives the desired information from the at least one server via the communications path selected by said selecting means.

8. An information receiving method, comprising:
a first selecting step of selecting one communications path from a plurality of communications paths connected to a network (113) including at least one server (114);
a first receiving step of receiving from the at least one server volume information representing a volume of desired information based on address information representing an address of the desired information stored in the at least one server on the network, via the communications path selected by said first selecting step;
a second selecting step of selecting one communications path from the plurality of communications path based on the volume of the desired information represented by the volume information received by said first receiving step; and
a second receiving step of receiving the desired information from the at least one server, via the communications path selected by said second selecting step.

9. A computer readable recording medium which stores a program for making a computer with communication performance function as an information receiving terminal device which comprises:
a connector (11, 12) which is selectively connected to one of a plurality of communications paths connected to a network (113) including at least one server (114); and
a processor (13, 14, 15, 16, 17, 18) which
receives, from the at least one server, volume information representing a volume of desired information based on address information representing an address of the desired information stored in the at least one server on the network, via the communications path connected to said connector,
selects one communications path from the plurality of communications path and connects the selected communications path with said connector, based on the volume of the desired information represented by the received volume information, and
receives the desired information from the at least one server via the selected communications path.

10. A program signal embodied in a carrier wave for making a computer with communications performance function as an information receiving terminal device which comprises:
a connector (11, 12) which is selectively connected to one of a plurality of communications paths connected to a network (113) including at least one server (114); and
a processor (13, 14, 15, 16, 17, 18) which
receives, from the at least one server, volume information representing a volume of desired information based on address information representing an address of the desired information stored in the at least one server on the network, via the communications path connected to said connector,
selects one communications path from the plurality of communications paths and connects the selected communications path with said connector, based on the volume of the desired information represented by the received volume information, and
receives the desired information from the at least one server via the selected communications path.
